# EUROPÄISCHE PATENTSCHRIFT

(11) **EP 2 225 021 B1**
(45) Veröffentlichungstag und Bekanntmachung des Hinweises auf die Patenterteilung: **30.01.2019**
(21) Anmeldenummer: 08861032.4
(22) Anmeldetag: 16.12.2008
(51) Int. Cl.: B01J 19/22, F16G 3/10

(54) **VORRICHTUNG UND VERFAHREN ZUR HERSTELLUNG WASSERABSORBIERENDER POLYMERARTIKEL AUF UMLAUFENDEN TRANSPORTBAND**
DEVICE AND METHOD FOR PRODUCING WATER-ABSORBENT POLYMER PARTICLES ON A ROTATING BELT CONVEYOR
DISPOSITIF ET PROCÉDÉ DE FABRICATION DE PARTICULES DE POLYMÈRES ABSORBANT L'EAU SUR UN TAPIS ROULANT

(30) Priorität: 17.12.2007 US 14109
(43) Veröffentlichungstag der Anmeldung: 08.09.2010
(73) Patentinhaber: BASF SE, 67056 Ludwigshafen am Rhein (DE)
(72) Erfinder: WEISMANTEL, Matthias, 63637 Jossgrund (DE); FUNK, Rüdiger, 65527 Niedernhausen (DE); BLAIR, Leigh R., Greenwood Springs MS 38848 (US); HEITZHAUS, Kevin D., Suffolk VA 23435 (US)
(74) Vertreter: BASF IP Association
(86) Internationale Anmeldenummer: PCT/EP2008/067617
(87) Internationale Veröffentlichungsnummer: WO 2009/077526

(56) Entgegenhaltungen:
- EP-A- 0 864 775
- EP-A- 1 669 635
- WO-A-2007/023097
- DE-A1- 3 544 770
- DE-A1- 10 029 571
- DE-B- 1 209 732
- DE-C1- 3 210 392
- GB-A- 979 106
- US-A- 3 436 978
- US-A- 5 360 379

## Beschreibung

Die vorliegende Erfindung betrifft eine Vorrichtung zur Herstellung wasserabsorbierender Polymerpartikel durch Polymerisation von Monomeren auf einem kontinuierlich umlaufenden Transportband, wobei Verbindungen des Transportbandes und Beschädigungen auf der Transportbandoberfläche mit einer Dichtmasse versiegelt wurden.
Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.
Wasserabsorbierende Polymere werden zur Herstellung von Windeln, Tampons, Damenbinden und anderen Hygieneartikeln, aber auch als wasserzurückhaltende Mittel im landwirtschaftlichen Gartenbau verwendet.
In DE 35 44 770 A1 wird eine Vorrichtung zur Herstellung wasserabsorbierender Polymerpartikel auf einem kontinuierlich umlaufenden Transportband beschrieben.

EP 1 683 813 A2 offenbart eine Vorrichtung zur Herstellung wasserabsorbierender Polymerpartikel auf einem kontinuierlich umlaufenden Transportband, wobei die Transportbandoberfläche aus einem Fluorharz mit niedrigem Erweichungspunkt besteht.

Die Enden des Transportbandes müssen bei der Montage auf die Vorrichtungen zu einem Endlosband zusammengefügt werden. Dazu können die Bandenden beispielsweise überlappend verklebt werden. Nachteilig bei diesem Verfahren ist das langsame Aushärten der Klebestelle und der damit verbundene Produktionsausfall. Außerdem kann Monomerlösung oder -suspension in den an der Verbindung entstandenen Spalt eindringen und durch Polymerisation angreifen. Weiterhin können an der Überlappungskante oder den durch die Überlappungskante bedingten Toträumen Polymergelreste haften bleiben.

DE 10029571 A1, DE 3210392 C1 und US 5360379 A offenbaren Transportbänder mit verschiedenen Bandverschlüssen. GB 979106 A offenbart ein Verfahren zur Reparation von beschädigten Gewebetransportbändern.

Aufgabe der vorliegenden Erfindung war die Bereitstellung einer verbesserten Vorrichtung zur Herstellung wasserabsorbierender Polymerpartikel. Insbesondere ist es eine Aufgabe der vorliegenden Erfindung Transportbänder bereitzustellen, die leicht zu montieren sind, eine lange Lebensdauer aufweisen und einfach repariert werden können.

Gelöst wurde die Aufgabe durch eine Vorrichtung zur Herstellung wasserabsorbierender Polymerpartikel durch Polymerisation wässriger Monomerlösungen, enthaltend mindestens ein ethylenisch ungesättigtes, säuregruppentragendes Monomer, das zumindest teilweise neutralisiert sein kann, und mindestens einen Vernetzer, auf einem kontinuierlich umlaufenden Transportband, dadurch gekennzeichnet, dass Verbindungen des Transportbandes und Beschädigungen auf der Transportbandoberfläche mit einer Dichtmasse versiegelt wurden.
Durch das Versiegeln der Verbindung kann ein Eindringen von Monomerlösung oder -suspension verhindert und die Lebensdauer des Transportbandes erhöht werden. Beschädigungen der Transportbandoberfläche werden ebenfalls versiegelt, wodurch die Transportbandoberfläche wiederhergestellt und eine Vergrößerung der Schadstelle vermieden wird.
In einer bevorzugten Ausführungsform der vorliegenden Erfindung wird das Transportband aber mittels mindestens eines mechanischen Verbinders zu einem Endlosband geschlossen. Die mechanischen Verbinder können lösbar oder nichtlösbar sein, wobei aber die lösbaren mechanischen Verbinder bevorzugt sind.
Geeignete nichtlösbare mechanische Verbinder sind beispielsweise Metallplättchen, die mit den beiden Enden des Transportbandes vernietet werden.

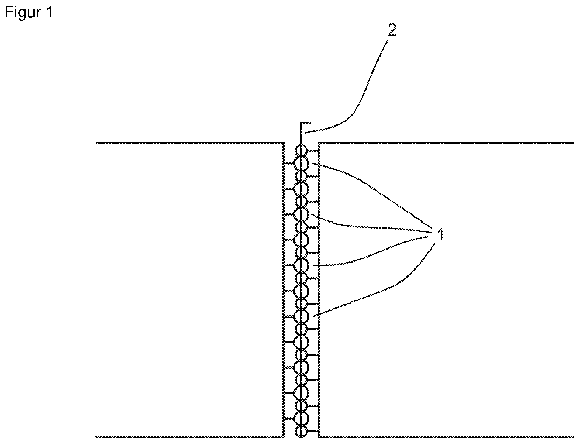

Geeignete lösbare mechanische Verbinder sind beispielsweise Ösen an den beiden Enden des Transportbandes, wobei die Ösen der beiden Enden des Transportbandes mittels mindestens eines Kupplungsstabes miteinander verbunden werden. Die Figur 1 zeigt ein Beispiel für eine derartige Verbindung mit einer Vielzahl von Ösen (1) und einem Kuplungsstab (2).
Die Verwendung der mechanischen Verbinder ermöglicht eine schnellere Montage und eine schnellere Inbetriebnahme des Transportbandes. Die Dichtmasse härtet deutlich schneller aus als die bislang üblichen Klebestellen. Insbesondere wird die unvermeidbare Zugbelastung durch die mechanischen Verbinder von der Dichtmasse fern gehalten.
Das Transportband sollte eine ausreichende Zug- und Biegefestigkeit sowie eine gute Flexibilität und chemische Beständigkeit aufweisen. Vorteilhaft werden daher an der Oberfläche beschichtete Gewebe als Transportbänder eingesetzt. Geeignete Gewebematerialien sind beispielsweise natürliche und synthetische Fasern, Glasfasern und Stahl. Vorzugsweise werden aber Gewebe auf Basis synthetischer Fasern verwendet, insbesondere Polyesterfasern.
Geeignete Materialien für die Transportbandoberseite sind beispielsweise Polyethylen, Polypropylen, Polyisobutylen, halogenierte Polyolefine, wie Polyvinylchlorid oder Polytetrafluorethylen, Polyamide, natürliche oder synthetische Kautschuke, Polyesterharze oder Epoxidharze. Das bevorzugte Material für die Transportbandoberfläche ist Silikonkautschuk.

Geeignete Dichtmassen sind beispielsweise Dichtmassen auf Basis von Polyacrylaten oder Polyurethanen. Die bevorzugte Dichtmassen sind Dichtmassen auf Basis von Silikonkautschuk. Die Dichtmassen weisen vorteilhaft eine möglichst geringe Schrumpfungsneigung auf.

Die verwendeten Dichtmassen sollten eine ausreichende thermische Beständigkeit aufweisen. Die Dichtmassen sind daher vorzugsweise bis mindestens 140°C, besonders bevorzugt bis mindestens 190 °C, ganz besonders bevorzugt bis mindestens 220 °C, beständig.

Weiterhin sollten die verwendeten Dichtmassen hydrophob, flexibel, glatt, sowie beständig gegen UV-Strahlung und Säuren sein.

Die hydrophoben Dichtmassen weisen gegenüber Wasser einen Kontaktwinkel von vorzugsweise mindestens 60 °, bevorzugt mindestens 70 °, besonders bevorzugt mindestens 80 °, ganz besonders bevorzugt mindestens 90 °, auf. Der Kontakwinkel ist ein Maß für das Benetzungsverhalten einer Flüssigkeit gegenüber einer Oberfläche und kann mit üblichen Methoden bestimmt werden, vorzugsweise gemäß ASTM D 5725. Ein niedriger Kontaktwinkel bedeutet eine gute und ein hoher Kontaktwinkel eine schlechte Benetzung.

Ein weiterer Gegenstand der vorliegenden Erfindung ist ein Verfahren zur Herstellung wasserabsorbierender Polymerpartikel durch Polymerisation einer Monomerlösung oder -suspension auf dem kontinuierlich umlaufenden Transportband der erfindungsgemäßen Vorrichtung.

Im erfindungsgemäßen Verfahren können beispielsweise wässrige Monomerlösungen oder -suspensionen, enthaltend
a) mindestens ein ethylenisch ungesättigtes, säuregruppentragendes Monomer, das zumindest teilweise neutralisiert sein kann,
b) mindestens einen Vernetzer,
c) optional ein oder mehrere mit den unter a) genannten Monomeren copolymerisierbare ethylenisch und/oder allylisch ungesättigte Monomere und
d) optional ein oder mehrere wasserlösliche Polymere,
eingesetzt werden.

Die Monomeren a) sind vorzugsweise wasserlöslich, d.h. die Löslichkeit in Wasser bei 23 °C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser. Idealerweise sind die Monomere a) in jedem Verhältnis mit Wasser mischbar.

Geeignete Monomere a) sind beispielsweise ethylenisch ungesättigte Carbonsäuren, wie Acrylsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 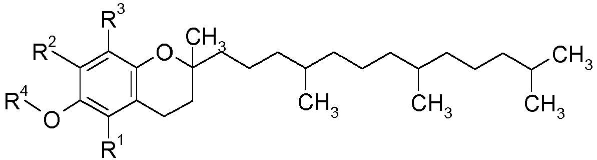 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R¹ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallyloxyethan, wie in EP 530 438 A1 beschrieben, Di- und Triacrylate, wie in EP 547 847 A1, EP 559 476 A1, EP 632 068 A1, WO 93/21237 A1,
WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/32962 A2 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylammoniumchlorid, Tetraallylethylendiamin, Allylester der Phosphorsäure sowie Vinylphosphonsäurederivate, wie sie beispielsweise in EP 343 427 A2 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 100 und 1000 aufweist, beispielsweise Polyethylenglykol-400-diacrylat.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a).

Mit den ethylenisch ungesättigten, säuregruppentragenden Monomeren a) copolymerisierbare ethylenisch ungesättigte Monomere c) sind beispielsweise Acrylamid, Methacrylamid, Crotonsäureamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere d) können Polyvinylalkohol, Polyvinylpyrrolidon, Stärke, Stärkederivate, Zellulose, Zellulosederivate, Polyglykole oder Polyacrylsäuren, vorzugsweise Polyvinylalkohol und Stärke, eingesetzt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Bei der Polymerisation auf einem kontinuierlich umlaufenden Band entsteht ein Polymergel, das in einem weiteren Verfahrensschritt üblicherweise zerkleinert wird, beispielsweise in einem Fleischwolf, Extruder oder Kneter.

Die Säuregruppen der erhaltenen Polymergele sind üblicherweise teilweise neutralisiert, vorzugsweise zu 25 bis 95 mol-%, bevorzugt zu 50 bis 80 mol-%, besonders bevorzugt zu 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen.

Die Neutralisation wird vorzugsweise auf der Stufe der Monomeren durchgeführt. Dies geschieht üblicherweise durch Einmischung des Neutralisationsmittels als wässrige Lösung, als Schmelze, oder bevorzugt auch als Feststoff. Beispielsweise kann Natriumhydroxid mit einem Wasseranteil deutlich unter 50 Gew.-% als wachsartige Masse mit einem Schmelzpunkt oberhalb 23 °C vorliegen. In diesem Fall ist eine Dosierung als Stückgut oder Schmelze bei erhöhter Temperatur möglich.

Es ist aber auch möglich die Neutralisation nach der Polymerisation auf der Stufe des Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Polymergels eingestellt wird. Wird das Polymergel zumindest teilweise nach der Polymerisation neutralisiert, so wird das Polymergel vorzugsweise mechanisch zerkleinert, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden.

Das Polymergel wird dann vorzugsweise mit einem Bandtrockner getrocknet bis der Restfeuchtegehalt vorzugsweise unter 15 Gew.-%, insbesondere unter 10 Gew.-% liegt, wobei der Wassergehalt gemäß der von der EDANA (European Disposables and Nonwovens Association) empfohlenen Testmethode Nr. WSP 230.2-05 "Moisture content" bestimmt wird. Wahlweise kann zur Trocknung aber auch ein Wirbelbetttrockner oder ein beheizter Pflugscharmischer verwendet werden. Um besonders weiße Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß um so einfacher und das Produkt um so weißer, wenn der Feststoffgehalt des Gels möglichst hoch ist. Bevorzugt liegt der Feststoffgehalt des Gels vor der Trocknung daher zwischen 25 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern.

Das getrocknete Polymergel wird hiernach üblicherweise gemahlen und klassiert, wobei zur Mahlung vorzugsweise ein- oder mehrstufige Walzenstühle, bevorzugt zwei- oder dreistufige Walzenstühle, Stiftmühlen, Hammermühlen oder Schwingmühlen, eingesetzt werden können.

Die mittlere Partikelgröße der als Produktfraktion abgetrennten Polymerpartikel beträgt vorzugsweise mindestens 200 µm, besonders bevorzugt von 250 bis 600 µm, ganz besonders von 300 bis 500 µm. Die mittlere Partikelgröße der Produktfraktion kann mittels der von der EDANA (European Disposables and Nonwovens Association) empfohlenen Testmethode Nr. WSP 220.2-05 "Partikel size distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von vorzugsweise mindestens 150 µm, besonders bevorzugt mindestens 200 µm, ganz besonders bevorzugt mindestens 250 µm, beträgt vorzugsweise mindestens 90 Gew.-%, besonders bevorzugt mindesten 95 Gew.-%, ganz besonders bevorzugt mindestens 98 Gew.-%.

Der Anteil an Partikeln mit einer Partikelgröße von vorzugsweise höchstens 850 µm, besonders bevorzugt höchstens 700 µm, ganz besonders bevorzugt höchstens 600 µm, beträgt vorzugsweise mindestens 90 Gew.-%, besonders bevorzugt mindesten 95 Gew.-%, ganz besonders bevorzugt mindestens 98 Gew.-%.

Die Polymerpartikel können zur weiteren Verbesserung der Eigenschaften nachvernetzt werden. Geeignete Nachvernetzer sind Verbindungen, die Gruppen enthalten, die mit mindestens zwei Carboxylatgruppen des Polymergels kovalente Bindungen bilden können. Geeignete Verbindungen sind beispielsweise Alkoxysiliylverbindungen, Polyaziridine, Polyamine, Polyamidoamine, Di- oder Polyepoxide, wie in EP 83 022 A2,
EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder ß-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in
EP 1 199 327 A2 Oxetane und zyklische Harnstoffe und in WO 2003/31482 A1 Morpholin-2,3-dion und dessen Derivate als geeignete Nachvernetzer beschrieben.

Weiterhin können auch Nachvernetzer eingesetzt werden, die zusätzliche polymerisierbare ethylenisch ungesättigte Gruppen enthalten, wie in DE 37 13 601 A1 beschrieben

Die Menge an Nachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf das Polymer.

In einer bevorzugten Ausführungsform der vorliegenden Erfindung werden vor, während oder nach der Nachvernetzung zusätzlich zu den Nachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind beispielsweise Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat ist bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.-%, vorzugsweise 0,005 bis 1 Gew.-%, besonders bevorzugt 0,02 bis 0,8 Gew.-%. jeweils bezogen auf das Polymer.

Die Nachvernetzung wird üblicherweise so durchgeführt, dass eine Lösung des Nachvernetzers auf das Polymergel oder die trockenen Polymerpartikel aufgesprüht wird. Im Anschluss an das Aufsprühen werden die mit dem Nachvernetzer beschichteten Polymerpartikel thermisch getrocknet, wobei die Nachvernetzungsreaktion sowohl vor als auch während der Trocknung stattfinden kann.

Das Aufsprühen einer Lösung des Nachvernetzers wird vorzugsweise in Mischern mit bewegten Mischwerkzeugen, wie Schneckenmischer, Scheibenmischer, Pflugscharmischer und Schaufelmischer, durchgeführt werden. Besonders bevorzugt sind Horizontalmischer, wie Pflugscharmischer und Schaufelmischer, ganz besonders bevorzugt sind Vertikalmischer. Geeignete Mischer sind beispielsweise Lödige-Mischer, Bepex-Mischer, Nauta-Mischer, Processall-Mischer und Schugi-Mischer.

Die Nachvernetzer werden typischerweise als wässrige Lösung eingesetzt. Über den Zusatz an nichtwässrigem Lösungsmittel kann die Eindringtiefe des Nachvernetzers in die Polymerpartikel eingestellt werden.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250 °C, bevorzugt 120 bis 220 °C, besonders bevorzugt 130 bis 210 °C, ganz besonders bevorzugt 150 bis 200 °C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

Anschließend kann das nachvernetzte Polymer erneut klassiert werden.

Die nachvernetzten Polymerpartikel können zur weiteren Verbesserung der Eigenschaften beschichtet oder nachbefeuchtet werden. Geeignete Beschichtungen zur Verbesserung des Akquisitionsverhaltens sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20.

Die gemäß dem erfindungsgemäßen Verfahren erhältlichen wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der wasserabsorbierenden Polymerpartikel beträgt üblicherweise weniger als 60 g/g. Die Zentrifugenretentionskapazität (CRC) wird gemäß der von der EDANA (European Disposables and Nonwovens Association) empfohlenen Testmethode Nr. WSP 241.2-05 "Centrifuge retention capacity" bestimmt.

## Patentansprüche

1. Vorrichtung zur Herstellung wasserabsorbierender Polymerpartikel durch Polymerisation wässriger Monomerlösungen, enthaltend mindestens ein ethylenisch ungesättigtes, säuregruppentragendes Monomer, das zumindest teilweise neutralisiert sein kann, und mindestens einen Vernetzer, auf einem kontinuierlich umlaufenden Transportband, **dadurch gekennzeichnet, dass** Verbindungen des Transportbandes und Beschädigungen auf der Transportbandoberfläche mit einer Dichtmasse versiegelt wurden.

2. Vorrichtung gemäß Anspruch 1, **dadurch gekennzeichnet, dass** das Transportband mindestens einen mechanischen Verbinder aufweist.

3. Vorrichtung gemäß Anspruch 2, **dadurch gekennzeichnet, dass** mindestens ein mechanischer Verbinder lösbar ist.

4. Vorrichtung gemäß Anspruch 3, **dadurch gekennzeichnet, dass** mindestens ein lösbarer Verbinder durch Lösen mindestens eines Kupplungsstabes gelöst werden kann.

5. Vorrichtung gemäß einem der Ansprüche 1 bis 4, **dadurch gekennzeichnet, dass** das Transportband ein an der Oberfläche beschichtetes Gewebe ist.

6. Vorrichtung gemäß Anspruch 5, **dadurch gekennzeichnet, dass** das Gewebe ein Gewebe auf Basis von Polyester ist.

7. Vorrichtung gemäß einem der Ansprüche 1 bis 6, **dadurch gekennzeichnet, dass** die Transportbandoberfläche aus Silikonkautschuk ist.

8. Vorrichtung gemäß einem der Ansprüche 1 bis 7, **dadurch gekennzeichnet, dass** die Dichtmasse eine Dichtmasse auf Basis von Silikonkautschuk ist.

9. Vorrichtung gemäß einem der Ansprüche 1 bis 8, **dadurch gekennzeichnet, dass** die Dichtmasse bis mindestens 140°C beständig ist.

10. Vorrichtung gemäß einem der Ansprüche 1 bis 9, **dadurch gekennzeichnet, dass** die Dichtmasse hydrophob ist.

11. Verfahren zur Herstellung wasserabsorbierender Polymerpartikel durch Polymerisation einer wässrigen Monomerlösung oder -suspension auf einem kontinuierlich umlaufenden Transportband einer Vorrichtung gemäß einem der Ansprüche 1 bis 10.

12. Verfahren gemäß Anspruch 11, **dadurch gekennzeichnet, dass** die wässrige Monomerlösung oder -suspension mindestens ein ethylenisch ungesättigtes, säuregruppentragendes Monomer, das zumindest teilweise neutralisiert sein kann, und mindestens einen Vernetzer enthält und die Menge an Vernetzer, bezogen auf das Monomer, 0,05 bis 1,5 Gew.-% beträgt.

## Claims

1. An apparatus for producing water-absorbing polymer particles by polymerizing aqueous monomer solutions comprising at least one ethylenically unsaturated monomer which bears acid groups and may have been at least partly neutralized, and at least one crosslinker, on a continuous conveyor belt, wherein joins of the conveyor belt and damage on the conveyor belt surface have been sealed with a sealing composition.

2. The apparatus according to claim 1, wherein the conveyor belt comprises at least one mechanical connector.

3. The apparatus according to claim 2, wherein at least one mechanical connector is releasable.

4. The apparatus according to claim 3, wherein at least one releasable connector can be released by disconnecting at least one coupling bar.

5. The apparatus according to any of claims 1 to 4, wherein the conveyor belt is a surface-coated fabric.

6. The apparatus according to claim 5, wherein the fabric is a fabric based on polyester.

7. The apparatus according to any of claims 1 to 6, wherein the conveyor belt surface is composed of silicone rubber.

8. The apparatus according to any of claims 1 to 7, wherein the sealing composition is a sealing composition based on silicone rubber.

9. The apparatus according to any of claims 1 to 8, wherein the sealing composition is stable up to at least 140°C.

10. The apparatus according to any of claims 1 to 9, wherein the sealing composition is hydrophobic.

11. A process for producing water-absorbing polymer particles by polymerizing an aqueous monomer solution or suspension on a continuous conveyor belt of an apparatus according to any of claims 1 to 10.

12. The process according to claim 11, wherein the aqueous monomer solution comprises at least one ethylenically unsaturated monomer which bears acid groups and may have been at least partly neutralized, and at least one crosslinker, and the amount of crosslinker, based on the monomer, is 0.05% to 1.5% by weight.

## Revendications

1. Dispositif pour la fabrication de particules polymères absorbant l'eau par polymérisation de solutions aqueuses de monomères, contenant au moins un monomère éthyléniquement insaturé, portant des groupes acides, qui peut être au moins partiellement neutralisé, et au moins un agent de réticulation, sur une bande de transport en circulation continue, **caractérisé en ce que** des raccords de la bande de transport et des endommagements sur la surface de la bande de transport ont été scellés avec un matériau d'étanchéité.

2. Dispositif selon la revendication 1, **caractérisé en ce que** la bande de transport comprend au moins un connecteur mécanique.

3. Dispositif selon la revendication 2, **caractérisé en ce qu'**au moins un connecteur mécanique est amovible.

4. Dispositif selon la revendication 3, **caractérisé en ce qu'**au moins un connecteur amovible peut être retiré par retrait d'au moins une tige de couplage.

5. Dispositif selon l'une quelconque des revendications 1 à 4, **caractérisé en ce que** la bande de transport est un tissu revêtu sur la surface.

6. Dispositif selon la revendication 5, **caractérisé en ce que** le tissu est un tissu à base de polyester.

7. Dispositif selon l'une quelconque des revendications 1 à 6, **caractérisé en ce que** la surface de la bande de transport est en caoutchouc de silicone.

8. Dispositif selon l'une quelconque des revendications 1 à 7, **caractérisé en ce que** le matériau d'étanchéité est un matériau d'étanchéité à base de caoutchouc de silicone.

9. Dispositif selon l'une quelconque des revendications 1 à 8, **caractérisé en ce que** le matériau d'étanchéité est résistant jusqu'à au moins 140 °C.

10. Dispositif selon l'une quelconque des revendications 1 à 9, **caractérisé en ce que** le matériau d'étanchéité est hydrophobe.

11. Procédé de fabrication de particules polymères absorbant l'eau par polymérisation d'une solution ou suspension aqueuse de monomères sur une bande de transport en circulation continue d'un dispositif selon l'une quelconque des revendications 1 à 10.

12. Procédé selon la revendication 11, **caractérisé en ce que** la solution ou suspension aqueuse de monomères contient au moins un monomère éthyléniquement insaturé, portant des groupes acides, qui peut être au moins partiellement neutralisé, et au moins un agent de réticulation, et la quantité d'agent de réticulation, par rapport au monomère, est de 0,05 à 1,5 % en poids.
